# EUROPÄISCHE PATENTSCHRIFT

(11) **EP 1 731 934 B1**
(45) Veröffentlichungstag und Bekanntmachung des Hinweises auf die Patenterteilung: **23.12.2009**
(21) Anmeldenummer: 06002140.9
(22) Anmeldetag: 02.02.2006
(51) Int. Cl.: G02B 6/00, G09F 19/22, G09F 13/04

(54) **Leuchtanordnung**
Light fixture
Dispositif lumineux

(30) Priorität: 09.06.2005 DE 202005009098 U
(43) Veröffentlichungstag der Anmeldung: 13.12.2006
(73) Patentinhaber: Casier, Alain, 59759 Arnsberg (DE); Casier, Luise, 59846 Sundern (DE)
(72) Erfinder: Casier, Alain, 59759 Arnsberg (DE); Casier, Luise, 59846 Sundern (DE)
(74) Vertreter: Ostermann, Thomas

(56) Entgegenhaltungen:
- DE-A- 10 322 561
- DE-A1- 19 736 421
- DE-U- 20 009 216
- DE-U- 20 202 319
- GB-A- 2 263 983
- US-A- 5 883 517
- US-A1- 2004 196 645

## Beschreibung

Die Erfindung betrifft eine Leuchtanordnung zur flächenhaften Lichtabstrahlung nach dem Oberbegriff des Patentanspruchs 1.

Aus der WO 00/14448 A1 ist eine Leuchtanordnung zur flächenhaften Lichtabstrahlung bekannt, bei der ein flächenhafter Lichtkörper sowie schmalseitig an diesem angeordnete Lichtquellen vorgesehen sind. Die Lichtquelle dient zur Einkopplung des Lichtes in den flächenhaften Lichtkörper an einer Schmalseite desselben. Eine Oberfläche des flächenhaften Lichtkörpers weist willkürlich angeordnete Markierungen bzw. Muster auf. Diese Muster dienen als Licht reflektierendes Material und sind willkürlich in einer Länge von bis zu 10 mm angebracht.

Aus der DE 100 43 516 A1 ist eine Leuchtanordnung zur flächenhaften Lichtabstrahlung mit einem flächenhaften Lichtkörper bekannt, an dessen Schmalseite eine Mehrzahl von reihenförmig angeordneten Lichtquellen angeordnet ist. Diese Lichtquellen sind als Leuchtdioden (LED's) ausgebildet und so ausgerichtet, dass das von den LED's abgestrahlte Licht an einer Schmalseite des Lichtkörpers eingekoppelt wird. Damit das eingekoppelte Licht an einer Oberfläche des flächenhaften Lichtkörpers flächenhaft ausgekoppelt werden kann, besteht der flächenhafte Lichtkörper aus einem opaken Material oder ist beispielsweise oberflächenseitig mit einem Punktraster bedruckt. Der flächenhafte Lichtkörper dient somit als Flächenleuchte, die als Teil eines Möbelstücks für die Raumbeleuchtung eingesetzt werden kann. Nachteilig an der bekannten Leuchtanordnung ist, dass sie aufgrund der begrenzten Leuchtstärke nicht zur Hinterleuchtung von Dekorationsflächen geeignet ist.

Aus der US 2004/0196645 A1 ist eine Leuchtanordnung zur flächenhaften Lichtabstrahlung mit einem flächenhaften Lichtkörper bekannt, der an einer Vorderseite eine mittels Sandstrahlen erzeugte Oberflächenstruktur aufweist. An einer gegenüberliegenden Rückseite des Lichtkörpers sind Markierungen angeordnet, so dass nach Totalreflexion des an einer Schmalseite des Lichtkörpers eingekoppelten Lichtes dasselbe an der Vorderseite ausgekoppelt wird zur Bildung eines vorgegebenen Lichtmusters. Das Lichtmuster wird im Wesentlichen durch die Markierungen an der Rückseite des Lichtkörpers vorgegeben.

Aus der DE 197 36 421 A1 ist eine Leuchtanordnung zur flächenhaften Lichtabstrahlung mit einem flächenhaften Lichtkörper bekannt. An Schmalseiten des Lichtkörpers ist eine Leuchtstoffröhre 5 angeordnet, so dass Licht durch die Schmalseite des Lichtkörpers in denselben einkoppelbar ist. An einer flächigen Rückseite des Lichtkörpers ist eine reflektierende Platte angeordnet, so dass das eingekoppelte Licht in Richtung einer gegenüberliegenden Vorderseite des Lichtkörpers auskoppelbar ist. Auf der Vorderseite des Lichtkörpers ist ein Schichtaufbau bestehend aus einer transparenten reflektierenden Folie, einer Farbfolie und einer Antireflexscheibe angeordnet. Die Farbfolie ermöglicht eine gewünschte Farbgebung des abzugebenden Lichtmusters. Allerdings ist zur Bildung des Lichtmusters erforderlich, dass ein den Lichtkörper umgebender Rahmen Lichtaustrittsöffnungen aufweist in Form des entsprechend vorgegebenen Lichtmusters.

Aus der GB-2263983-A ist ein Lichtkasten zur Aufnahme flächenhafter Lichtleiter und Fluoreszenzröhren bekannt, welche entlang der Kanten der Lichtleiter angeordnet sind.

Aus der DE-200 09 216-U1 ist ein Schildteil aus Akryl bekannt, das als Informationsträger dient und in ein Rahmenprofil und eine Halterahmen eingeführt wird.

Aus der DE-202 02 319-U1 ist ein beleuchteter Wechselrahmen mit einem milchig opalen plattenartigem Diffusor bekannt.

Aus der DE-103 22 561-A1 ist ein Rahmen mit einem LED-Streifen und einem Glaselement bekannt.

Aufgabe der vorliegenden Erfindung ist es, eine Leuchtanordnung zur flächenhaften Lichtabstrahlung derart weiterzubilden, dass Werbe- oder Informationsflächen mit einer verbesserten Raumwirkung sowie unter einfacher Entnahme einer Dekorationsfläche illuminiert werden können.

Zur Lösung dieser Aufgabe weist die Erfindung die Merkmale des Patentanspruchs 1 auf.

Der besondere Vorteil der Erfindung besteht darin, dass auf Platz sparende und effiziente Weise eine Beleuchtung von werbe- bzw. Informationsflächen gewährleistet wird. Ein flächenhafter Lichtkörper, an dessen mindestens einer Schmalseite Licht eingekoppelt wird, dient als Hinterleuchtungsfläche für eine translueszente Dekorationsfläche, die einer vorderseitigen Oberfläche des flächenhaften Lichtkörpers zugeordnet ist. Die Leuchtanordnung kann mit der Dekorationsfläche beispielsweise in Schaufenstern, an Litfasssäulen oder an beliebigen Orten zur Informations- /Werbezwecken eingesetzt werden. Beispielsweise kann die Leuchtanordnung mit der Dekorationsfläche als Bild an einer Wand montiert sein. Ist die Leuchtanordnung mit einer Rückseite beabstandet zu der Wand angeordnet, kann das eingekoppelt Licht auch rückseitig des Lichtkörpers ausgekoppelt werden, so dass ein räumlicher Eindruck der beleuchteten Dekorationsfläche entsteht. Vorteilhaft ist die von der Leuchtanordnung ausgehende Leuchtstärke so groß, dass die Dekorationsfläche zusammen mit einem beispielsweise alufarbenen Rahmen den Eindruck eines Flachbildschirmes mit einem Bildmotiv vermittelt. Vorteilhaft können somit auf einfach Weise hochwertig anmutende Bildmotive zu Dekorations-/Informationszwecken bereitgestellt werden. Nach der Erfindung ist die Dekorationsfläche als eine Informationsfolie ausgebildet. Die Informationsfolie kann beispielsweise ein Bildmotiv oder werbeinformationen beinhalter. Die erfindungsgemäße Anordnung ist relativ dünn angeordnet, da die Dicke derselben im Wesentlichen durch den flächenhaften Lichtkörper sowie eine eventuelle Deckplatte geprägt wird. Der flächenhafte Lichtkörper bzw. Lichtleitkörper ist vorzugsweise aus einem Glas- oder Kunststoffmaterial hergestellt, an der die Informationsfolie durch elektrostatische Anziehung haftend angeordnet ist. Die Informationsfolie kann ein farbiges und/oder schwarzweißes Motiv aufweisen, das beispielsweise durch Siebdrucken auf einer transparenten Folie aufgebracht ist. Die Hinterleuchtung ermöglicht zum einen bei Dunkelheit ein Sichtbarmachen der Informationsfolie. Zum anderen ermöglicht sie bei Tag einen räumlichen Eindruck des Bildmotivs. Dieser räumlich Eindruck wird dadurch unterstützt, dass die Rückseite des flächenhaften Lichtkörpers nicht mit einer Dekorationsfläche behaftet ist, so dass das Licht auch zur Rückseite hin ausgekoppelt wird.

Bei Beabstandung der Leuchtanordnung bzw. der Rückseite des flächenhaften Lichtkörpers zu einer Wand begünstigt das nach hinten abgestrahlte Licht die Raumwirkung.

Ausführungsbeispiele der Erfindung werden nachfolgend anhand der Zeichnungen näher erläutert.

Es zeigen:
- Figur 1: eine perspektivische Vorderansicht eines flächenhaften Lichtkörpers der Leuchtanordnung mit einem benachbarten Halteprofil und einer Uförmigen Blende, teilweise in Explosionsdarstellung,
- Figur 2: einen Querschnitt durch eine Leuchtanordnung nach einer ersten Ausführungsform,
- Figur 3: eine Draufsicht auf die Leuchtanordnung während des Wechsels einer Dekorationsfläche,
- Figur 4: einen Querschnitt durch die Leuchtanordnung mit entnommener Deckplatte sowie Dekorationsfläche,
- Figur 5: einen Querschnitt durch eine beispielhafte Leuchtanordnung mit einer Natursteinplatte als Deckplatte und
- Figur 6: eine Leuchtanordnung nach einer zweiten Ausführungsform mit einem dem flächenhaften Lichtkörper zugeordneten Solarmodul.

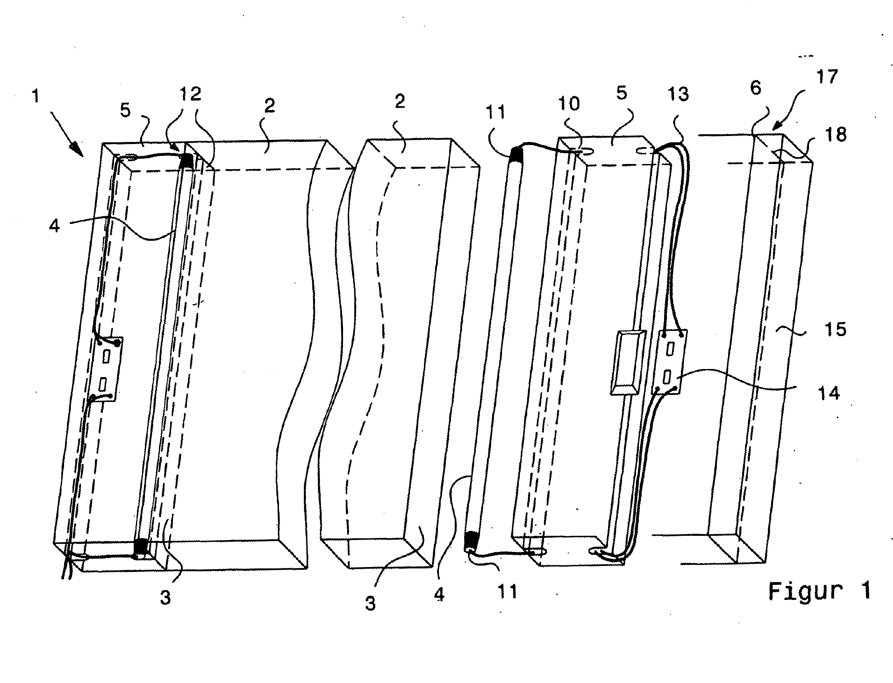

Eine Leuchtanordnung 1 nach einer ersten Ausführungsform gemäß den Figuren 1 bis 4 besteht im Wesentlichen aus einem flächenhaften Lichtkörper 2, aus an gegenüberliegenden langen Schmalseiten 3 des Lichtkörpers 2 verlaufenden rohrförmigen Lichtquellen 4, ebenfalls entlang der langen Schmalseiten 3 und die Lichtquellen 4 aufnehmenden Halteprofile 5, einen den Lichtkörper 2 umfassenden Rahmen 6, eine auf einer Vorderseite 7 des Lichtkörpers 2 angeordnete Dekorationsfläche 8 sowie ein aus einer die Dekorationsfläche 8 abdeckenden transparente Deckfläche 9.

Der flächenhafte Lichtkörper 2 ist aus einem transparenten (glasklaren) Glas- oder Kunststoffmaterial (Acrylplatte) hergestellt. Der Lichtkörper 2 ist quaderförmig ausgebildet mit den gegenüberliegenden Schmalseiten 3 sowie den gegenüberliegenden kurzen Schmalseiten 3' einerseits und der großflächigen Vorderseite 7 bzw. einer großflächigen Rückseite 7'. Der Lichtkörper 2 ist somit rechteckförmig bzw. plattenförmig ausgebildet und besteht aus einem starren, Licht leitenden Material.

Die Schmalseiten 3, 3' sind vorzugsweise eben ausgebildet und erstrecken sich senkrecht zu der Vorderseite 7 bzw. Rückεeite 7'.

Die rohrförmige Lichtquelle 4 ist als eine Gasentladungslampe ausgebildet, die vorzugsweise als Kaltlichtkathodenlampe (CCFL) ausgebildet ist. Die Gasentladungslampe 4 erstreckt sich über die gesamte Länge der langen Schmalseite 3 und ist in einer Längsnut 10 des Halteprofils 5 klemmend gelagert. Die Längsnut 10 ist auf einer der langen Schmalseite 3 zugewandten Seite des Halteprofils 5 angeordnet. Das Halteprofil 5 besteht vorzugsweise aus einem Kunststoffmaterial, insbesondere Polyamid. Die Längsnut 10 ist an den freien Enden verjüngend ausgebildet, so dass stirnseitige Endkappen 11 der Gasentladungslampe 4 klemmend an dem Ende der Längsnut 10 gehalten sind. Die Längsnut 10 ist derart ausgebildet, dass der leuchtende Bereich der Gasentladungslampe 4 ohne Berührung der Längsnut 10 in derselben gelagert ist. Die Längsnut 10 wird durch gegenüberliegende Stege 12 begrenzt, die an ihren freien Stirnseiten unmittelbar an der langen Schmalseite 3 des Lichtkörpers 2 anliegen. Die Stege 12 dienen somit als Anschlagfläche des Halteprofils 5 an dem Lichtkörper 2. Sie ermöglichen darüber hinaus einen vorgegebenen Abstand des leuchtenden Teils der Gasentladungslampe 4 zu der langen Schmalseite 3 des Lichtkörpers 2. Durch die gegenüberliegenden langen Schmalseiten 3 wird das Licht in den flächenhaften Lichtkörper 2 eingekoppelt.

Auf einer der langen Schmalseite 3 abgewandten Seite des Halteprofils 5 ist ein weiterer Hohlraum vorgesehen, so dass elektrische Zuführleitungen 13 der Gasentladungslampe 4 sowie ein Vorschaltgerät 14 der Gasentladungslampe 4 positioniert und gehalten werden können.

Zur Befestigung des Halteprofils 5 an dem flächenhaften Lichtkörper 2 ist der Rahmen 6 bestehend aus zwei langen U-förmigen Blenden 15 sowie zwei kurzen U-förmigen Blenden 15' gebildet, die sich randseitig der langen Schmalseiten 3 bzw. der kurzen Schmalseiten 3' erstrecken. Die U-förmigen Blenden 15, 15' sind aus einem Aluminiumprofil gebildet, das zwei gegenüberliegende Schenkel 16 aufweist, deren freie Ende einen Randbereich des flächenhaften Lichtkörpers 2 umfassen. Die Blenden 15, 15' weisen einen Scheitelbereich 17 auf, in dem im Wesentlichen das Halteprofil 5 eingefasst ist. Der Scheitelbereich 17 weist eine Querstrebe 18 auf, die zur Erhöhung der Stabilität des A-luprofils 15, 15' beiträgt.

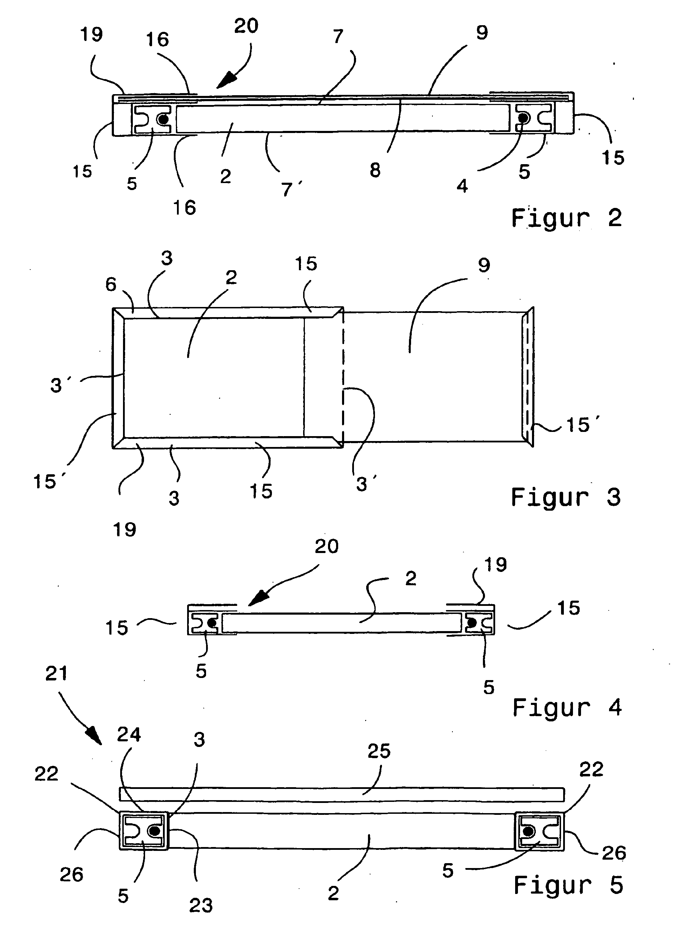

Der lichte Abstand der Schenkel 16 zueinander ist derart gewählt, dass sie neben dem Randbereich des flächenhaften Lichtkörpers 2 die Dekorationsfläche 8 sowie die transparente Deckfläche 9 aufnehmen, siehe Figur 2. Vorzugsweise weisen die U-förmigen Blenden 15, 15' auf einer Vorderseite 19 eine schlitzförmige Ausnehmung 20 zur Aufnahme der Dekorationsfläche 8 und/oder der Deckfläche 9 auf.

Wie insbesondere aus den Figuren 3 und 4 ersichtlich ist, kann auf diese Weise mittels relativ einfacher Handhabung ein Wechsel der Dekorationsfläche 8 erfolgen. Hierzu wird in einem ersten Schritt die transparente Deckfläche 9 mittels Ergreifen eines derselben zugeordneten und fest mit derselben verbundenen kurzen Rahmenteils 15' erfasst und dann in Längsrichtung der Leuchtanordnung 1 heraus geschoben. Nachfolgend kann die auf der Vorderseite 7 des Lichtkörpers 2 angeordnete Dekorationsfläche 8, die durch elektrostatische Aufladung haftend an dem Lichtkörper 2 gehalten ist, entfernt werden. Die Dekorationsfläche 8 ist vorzugsweise als eine Folie ausgebildet, so dass die Dekorationsfläche 8 einfach entnommen und durch eine andere auf einfache Weise in den Schlitz 20 eingesetzt werden kann. Nachfolgend wird die Deckplatte 9 wieder unter Einschieben derselben in den Schlitz 20 eingesetzt, bis das fest mit der Deckplatte 9 verbundene Rahmenteil 15' bündig an den gegenüberliegenden Enden der langen Rahmenteile 15 anliegt.

Die Dekorationsfläche 8 kann beispielsweise ein farbiges Bildmotiv mit Informationen, wie beispielsweise Preisangaben, aufweisen (Produktinformationen). Zur Hinterleuchtung dieser Produktinformationen wird das von den gegenüberliegenden rohrförmigen Gasentladungslampen 4 emittierte Licht in die langen Schmalseiten 3 eingekoppelt und dann flächig und homogen zu der Vorderseite 7 und der Rückseite 7' hin ausgekoppelt. Es erfolgt somit eine Hinterleuchtung der Informationsfolie 8. Der Lichtkörper 2 ist aus einem glasklaren Glas- oder Kunststoffmaterial (Acrylplatte) gebildet. Es ergibt sich somit eine hinterleuchtete Informationsfläche, die zu Werbezwecken bzw. Dekorationsflächen im Innen- oder Außenbereich eingesetzt werden kann. Die Dekorationsfläche bildet somit in Verbindung mit dem flächenhaften Lichtkörper 2 ein Lichtmuster.

Nach einem nicht dargestellten Beispiel kann das Lichtmuster auch durch mechanische Strahlmittel hervorgerufen werden, mit denen die Oberfläche des Lichtkörpers 2 beaufschlagt werden. Vorzugsweise können die mechanischen Strahlmittel als Körner ausgebildet sein, die mittels Sandstrahlen eine Deformierung der Oberflächenstruktur des Lichtkörpers 2 hervorrufen. Hierdurch wird eine streuende Fläche erzeugt, die ein Auskoppeln des Lichtes durch die Vorderseite 7 bzw. Rückseite 7' des Lichtkörpers 2 ermöglicht. Gemäß dieser Ausführungsform kann die Leuchtanordnung 1 auch ohne zusätzliche Dekorationsfläche 8 bzw. Deckfläche 9 eingesetzt werden.

Nach einem weiteren nicht dargestellten Beispiel kann das Lichtmuster auch durch Beaufschlagen von Stanzvertiefungen in die Vorderseite 7 bzw. unter der Rückseite 7' des Lichtkörpers 2 erzeugt werden. Auf diese Weise ergeben sich rasterförmig angeordnete Streuorte an der Oberfläche des Lichtkörpers 2, die zu einer punktuellen Auskopplung des Lichtes an diesen Streuorten führen. Diese Variante kann auch zu Dekorationszwecken im Innen- oder Außenbereich eingesetzt werden, gegebenenfalls mit oder ohne Auflage einer Dekorationsfläche 8 auf der Vorderseite 7 des Lichtkörpers 2.

Nach einem weiteren Beispiel gemäß Figur 5 kann eine Leuchtanordnung 21 auch in einem Nassbereich, wie beispielsweise in einem Bad, vorgesehen sein. Hierzu sind die rohrförmige Gasentladungslampen 4 sowie das Halteprofil 5 in einem hermetisch zur Umgebung abgeschlossenen Rohr 22 angeordnet, das mit einer Flachseite 23 unmittelbar an der langen Schmalseite 3 des Lichtkörpers 2 anliegt. Gleiche Bauteile bzw. Bauteilfunktionen zu dem vorhergehenden Ausführungsbeispiel sind mit den gleichen Bezugszeichen versehen.

Zur hermetischen Abriegelung der Gasentladungslampe 4 kann das im Querschnitt rechteckige oder quadratische Rohr 22 aus einer vakuumisierten Glasumhüllung bestehen. Lediglich die elektrischen Zuführleitungen 13 führen unter Bildung einer nicht dargestellten Abdichtung aus dem Glasrohr 22 heraus. An der Vorderseite 7 des Lichtkörpers 2 bzw. einer Vorderseite 24 des Rohrs 22 ist eine Natursteinplatte 25 angeordnet, die auf diese Weise hinterleuchtbar ist. Die Natursteinplatte 25 kann beispielsweise als Marmorplatte mit einer Dicke von 5 mm ausgebildet sein. Vorzugsweise ist die Außenfläche 26 der rahmenartig die den Lichtkörper 2 umfassenden Rohre 22 bündig zu dem äußeren Rand der Natursteinplatte 25 angeordnet, so dass die Natursteinplatte 25 beispielsweise als einzelne Fliese an der Wand in einem Bad anbringbar ist. Dabei schließen sich benachbart zu der Natursteinplatte 25 weitere Fliesen, gegebenenfalls ohne Hinterleuchtung, in üblicher Anordnung an.

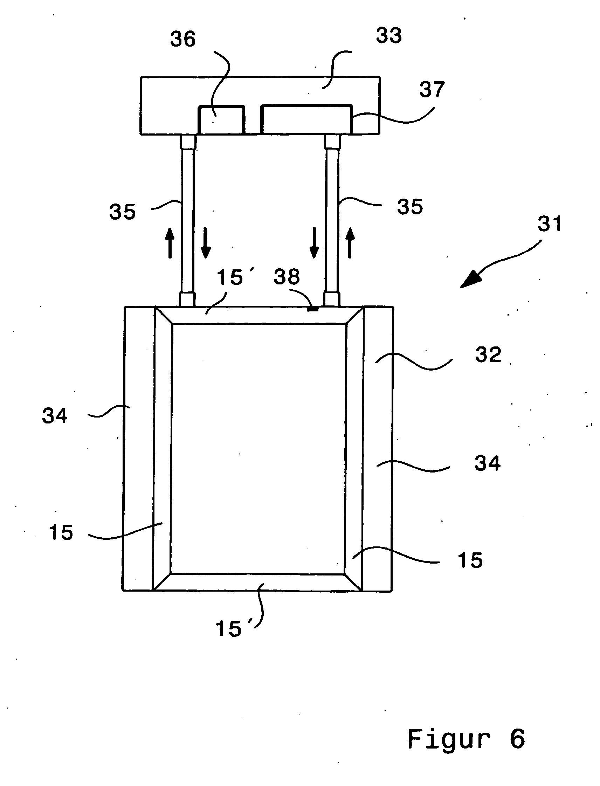

Nach einer zweiten Ausführungsform gemäß Figur 6 kann eine Leuchtanordnung 31 vorgesehen sein, die zusätzlich zu den Komponenten der Leuchtanordnung 1 ein Solarmodul 32 und einen Träger 33 aufweist. Das Solarmodul 32 umfasst rechteckförmige Solarzellenplatten 34, die flügelartig an langen Rahmenteilen 15 angesetzt sind. Der Rahmen 6 ist über Halteseile 35 an dem Träger 33 gehalten, der nach Art eines Baldachins in einem Außenbereich angeordnet sein kann. In dem Träger 33 sind ein elektrisches Steuergerät 36 sowie ein Ladungsspeicher (Akku 37) angeordnet. Die Halteseite 35 sind aus einem elektrisch leitenden Material (Stahlmaterial) hergestellt und ermöglichen die Zuführung der durch die Solarzellenplatten 34 eingespeisten elektrischen Energie zu dem Steuergerät 36, mittels dessen der Akku 37 geladen wird. Zum anderen ermöglichen die Halteseile 35 bei Dunkelheit die Zuführung der elektrischen Energie von dem Ladungsspeicher 37 zu der in dem Rahmen 6 integrierten Gasentladungslampe 4. Da die Gasentladungslampe 4 mit einer Niederspannung von 12 Volt betrieben wird, sind keine zusätzlichen Sicherheitsmaßnahmen erforderlich.

In einem oberen Bereich des Rahmens 6 ist ein Sonnensensor 38 integriert, der an das Steuergerät 36 ein Sensorsignal abgibt. In dem Steuergerät 36 kann ein Steuerprogramm implementiert sein, so dass in Abhängigkeit von dem Sensorsignal die Gasentladungslampe 4 mit der in dem Akku 37 gespeicherten Energie gespeist wird. Insbesondere zur Hinterleuchtung bei Dunkelheit kann es vorgesehen sein, dass bei Unterschreiten der Sensorsignalhöhe unter ein vorgegebenes Helligkeitsniveau die Gasentladungslampe 4 mit elektrischer Energie versorgt (eingeschaltet) wird.

Nach nicht dargestellten Ausführungsformen kann das Solarmodul auch in einem Sockel der Leuchtanordnung 31 integriert sein, wenn die Leuchtanordnung an einem beliebigen Ort aufgestellt werden soll. Der Sockel dient zugleich als Ständer für die Leuchtanordnung. Die Solarzellenplatten sind vorzugsweise in einem oberhalb des Rahmens 6 vorgesehenen Bereich angeordnet.

Alternativ kann die Leuchtanordnung auch in einer Litfasssäule integriert sein. Die Dachfläche der Litfasssäule dient dann zur Anordnung der Solarmodulplatten.

Die Deckfläche 9 ist vorzugsweise als glasklare transparente Deckplatte ausgebildet, die zur Fixierung und/oder zur Schutzabdeckung der Informationsfolie 8 dient.

## Patentansprüche

1. Leuchtanordnung zur flächenhaften Lichtabstrahlung mit einem flächenhaften transparenten Lichtkörper (2), an dessen Schmalseite (3) mindestens eine Lichtquelle (4) positioniert ist zur Einkopplung des Lichtes in die Schmalseite (3) des Lichtkörpers (2) und mit einer an der Vorderseite (7) des Lichtkörpers (2) angeordneten zumindest teilweise translueszenten Informationsfolie (8) zur Bildung eines Lichtmusters, so dass das eingekoppelte Licht flächenhaft an der Vorderseite (7) abgestrahlt wird, **dadurch gekennzeichnet, dass** das eingekoppelte Licht auch an einer Rückseite (7') des flächenhaften Lichtkörpers (2) abgestrahlt wird, dass ein den Lichtkörper (2) umfassender Rahmen (6) vorgesehen ist, wobei der Rahmen (6) randseitig der *Schmalseiten* (*3*, *3*') des Lichtkörper (2) erstreckende U-förmige Blenden (15, 15') aufweist, dass ein die Lichtquelle (4) aufnehmendes Halteprofil (5) in einem Scheitelbereich (17) der U-förmigen Blende (15) eingefasst ist, wobei die als Gasentladungslampe ausgebildete Lichtquelle (4) in einer Längsnut (10) des Halteprofils (5) gelagert ist und wobei ein Vorschaltgerät (14) der Gasentladungslampe (4) in einem Hohlraum in der dem Lichtkörper abgewandten Seite des Halteprofils (5) gehalten ist.

## Claims

1. Light fixture for radiating light in an area mode comprising a flat-shaped transparent light body (2) on a narrow side (3) of which a light source (4) is arranged for light input into said narrow side (3) of said light body (2) and an at least partially translucent information foil (8) at a front side (7) of said light body (2) to create a light pattern such that the input light may be emitted via said front side (7) in an area mode, **characterized by** the fact the input light is emitted from a rear side (7') also of the flat-shaped light body (2), that a frame (6) surrounding the light body (2) is provided which comprises U-shaped masking members (15, 15') extending along the marginal edges of the narrow sides (3, 3') of the light body (2), and that a holding section (5) adapted to accommodate the light source (4) is disposed in an apex area (17) of the U-shaped masking member (15) wherein the light source (4) provided in form of a gas discharge lamp is arranged in a longitudinal groove (10) of the holding section (5) and wherein a ballast unit (14) of the gas discharge lamp (4) is retained in a cavity of said holding section (5) on the side facing away from the light body.

## Revendications

1. Dispositif lumineux pour le rayonnement de lumière en nappe plane, avec un corps lumineux transparent (2), sur le côté étroit (3) duquel est positionnée une source de lumière (4) pour le couplage de la lumière dans le côté étroit (3) du corps lumineux (2), et avec une feuille d'information (8) au moins partiellement translucide, disposée sur la face antérieure (7) du corps lumineux (2) pour la formation d'un modèle lumineux, de sorte que la lumière couplée soit rayonnée en nappe plane sur la face antérieure (7), **caractérisé en ce que** la feuille d'information (8) est disposée, adhérente, sur la face antérieure (7) du corps lumineux (2), que la lumière couplée est rayonnée aussi sur une face arrière (7') du corps lumineux (2) plan, qu'un cadre (6) embrassant ledit corps lumineux (2) est prévu, ledit cadre (6) présentant des écrans (15, 15') en forme de U, qui s'étendent sur les bords des côtés étroits (3, 3') du corps lumineux (2), qu'un profilé de maintien (5), qui accueille la source de lumière (4), est enchâssé dans une région du sommet (17) de l'écran (15) en forme de U, la source de lumière (4), conçue en tant que lampe à décharge gazeuse, étant montée dans une rainure longitudinale (10) du profilé de maintien (5), et un ballast (14) de la lampe à décharge gazeuse (4) étant maintenu dans un espace vide, dans la face du profilé de maintien (5) opposée au corps lumineux.
